# EUROPEAN PATENT APPLICATION

(11) **EP 4 821 771 A1**
(43) Date of publication of application: **14.10.2026**
(21) Application number: 24900326.0
(22) Date of filing: 28.10.2024
(51) Int. Cl.: B60R 21/207

(54) **AIRBAG DEVICE FOR PROTECTING REAR SEAT OCCUPANT OF VEHICLE**

(30) Priority: 04.12.2023 JP 2023204529
(71) Applicant: AUTOLIV DEVELOPMENT AB, 44783 Vargarda (JP)
(72) Inventor: TOKUNAGA, Noe, Yokohama-shi, Kanagawa 222-8580 (JP); FUJITA, Daisuke, Yokohama-shi, Kanagawa 222-8580 (JP); MORITA, Kazuki, Yokohama-shi, Kanagawa 222-8580 (JP); NEMOTO, Toshihide, Yokohama-shi, Kanagawa 222-8580 (JP); MURAKAMI, Sho, Yokohama-shi, Kanagawa 222-8580 (JP); SHIMADA, Takuma, Yokohama-shi, Kanagawa 222-8580 (JP); ABE, Kazuhiro, Yokohama-shi, Kanagawa 222-8580 (JP); MIURA, Yuka, Yokohama-shi, Kanagawa 222-8580 (JP); KANEKO, Masanori, Yokohama-shi, Kanagawa 222-8580 (JP)
(74) Representative: Feucker, Max Martin
(86) International application number: PCT/JP2024/038358
(87) International publication number: WO 2025/121030

(57) **Abstract**

An airbag cushion 108 of an airbag device 100 has formed therein a cushion base part 126 along a seat back part 112, a cushion upper part 128 that expands and deploys, protruding from an upper part of the cushion base part 126 toward a rear seat 104, a pair of side chambers 122 and 124 that respectively expand and deploy, protruding from both sides of the cushion base part 126 toward the rear seat 104, and a cushion recess part 134 that is formed in a range below the cushion upper part 128 and between the pair of side chambers 122 and 124 and is indented toward the front seat 102.

## Description

### TECHNICAL FIELD

The present invention relates to a vehicle rear seat occupant protection airbag device that restrains a rear seat occupant.

### BACKGROUND ART

Airbag devices have generally become standard equipment in vehicles in recent years. An airbag device is a safety device which is operated in the event of an emergency such as a vehicle collision, retaining and protecting occupants utilizing an airbag cushion which expands and deploys based on gas pressure. There are various types of airbag devices depending on the installation site and application. For example, in a driver's seat, a front airbag is provided in the center of a steering wheel. In addition, in a front passenger seat, a passenger airbag is provided on an instrument panel or a peripheral area thereof.

Airbag cushions having various shapes have been developed in consideration of contact locations with surrounding structures and occupants. For example, FIG. 1 of Patent Document 1 discloses a configuration provided with a center bag 21 and a pair of side bags 22 as an airbag 11 for a passenger seat occupant. Patent Document 1 indicates that protection with favorable characteristics can be provided to a head part A1 and shoulder part A2 of an occupant A.

Currently, airbag devices have also been developed to protect rear seat occupants. For example, FIG. 1 of Patent Document 2 discloses an airbag 1 that expands and deploys rearward from the seat rear surface part of the seat back of the front seat 1. The airbag 1 can suitably restrain an occupant 3 in a rear seat 4 from the front.

### RELATED ART DOCUMENTS

### PATENT DOCUMENTS

Patent Document 1: JP 2010-201980 A
Patent Document 2: Chinese Utility Model No. 202283906

### SUMMARY OF THE INVENTION

As in Patent Document 2, in an airbag device for rear seat occupant protection, an airbag cushion is stowed in the back surface of a seat back of a front seat. However, the angle of a seat back of a vehicle seat can be changed using a reclining function. In an airbag device for rear seat occupant protection, depending on the angle of the seat back of the front seat, restraint of the rear seat occupant by a simple cubic airbag cushion may become disadvantageous.

### PROBLEM TO BE SOLVED BY THE INVENTION

In light of this manner of problems, an objective of the present invention is to provide a vehicle rear seat occupant protection airbag device with improved occupant restraint performance while suppressing injury values of occupants.

### MEANS FOR SOLVING THE PROBLEM

To resolve the problem described above, a typical configuration of a vehicle rear seat occupant protection airbag device according to the present invention includes:
a seat back part that forms a back surface of a seat back of a front seat of a vehicle;
an airbag cushion that is stowed in a prescribed stowed form in the seat back part and expands and deploys between the seat back part and a rear seat occupant seated in a rear seat behind the front seat; and
an inflator that is installed inside the seat back part and supplies gas to the airbag cushion, wherein
the airbag cushion includes:
   a cushion base part that expands and deploys along the seat back part;
   a cushion upper part that expands and deploys, protruding from an upper part of the cushion base part toward the rear seat;
   a pair of side chambers that respectively expand and deploy, protruding from both sides of the cushion base part in a width direction of the front seat toward the rear seat; and
   a cushion recess part that is formed in a range below the cushion upper part and between the pair of side chambers and is indented toward the front seat.

In the airbag cushion having the configuration described above, the head part and shoulders of the rear seat occupant are restrained by the cushion upper part and the side chambers, and the cushion recess part is formed, so that the airbag cushion does not contact the chest part and abdomen part of the rear seat occupant, or contacts the chest part and abdomen part later than the head part and shoulders. According to this configuration, while the rear seat occupant is sufficiently restrained via the head part and shoulders, injury values of the chest part and abdomen part can be suppressed.

The side chambers described above may expand and deploy in a circular shape when viewed from the width direction of the front seat.

With the circular side chambers described above, since there is no bias in shape, the shoulders of the rear seat occupant can be suitably restrained by any portion on the circumference.

After expansion and deployment, the lower parts of the side chambers described above may be in a state of contact with a seat cushion of the rear seat.

According to the configuration described above, the orientation of the side chambers can be stabilized, and the restraining force can be improved. For example, the shoulders and knees of the rear seat occupant can be suitably restrained by the side chambers.

The airbag cushion described above may further have an inflator connection part provided in the cushion base part and into which a part of the inflator is inserted, and an inner vent that connects the cushion base part and the side chamber and sends gas from the inflator from the cushion base part to the side chamber.

With the configuration described above, gas can be supplied to the side chamber following the cushion base part, and the shoulders of an occupant can be suitably restrained by the side chamber.

The cushion upper part described above may expand and deploy such that an internal angle between the cushion upper part and the cushion base part is an obtuse angle.

According to the configuration described above, since the internal angle between the cushion upper part and the cushion base part is an obtuse angle, when the head part of the rear seat occupant enters the cushion upper part, the cushion upper part is less likely to bend relative to the cushion base part, and the head part of the rear seat occupant can thereby be suitably restrained.

After expansion and deployment, a tip end part on the rear seat side of the cushion upper part described above may be in a state of protruding farther in the direction of the rear seat occupant than end parts on the rear seat side of the pair of side chambers.

According to the configuration described above, the shoulders contact the side chambers after the head part contacts the cushion upper part or at the same time as the head part contacts the cushion upper part, and the rear seat occupant can thereby be efficiently restrained.

After expansion and deployment, a lower-end part of the cushion base part described above may be in a state of being located near a horizontal line extended from a front-end part of an upper surface of the seat cushion of the rear seat.

According to the configuration described above, the cushion base part is arranged in front of the knees of the rear seat occupant, and the knees of the rear seat occupant can be suitably restrained.

### EFFECT OF THE INVENTION

According to the present invention, a vehicle rear seat occupant protection airbag device with improved occupant restraint performance can be provided while suppressing injury values of occupants.

### BRIEF DESCRIPTION OF THE DRAWINGS

FIG. 1 is a diagram depicting an overview of a vehicle rear seat occupant protection airbag device according to an embodiment of the present invention;
FIG. 2 is a perspective view depicting the airbag cushion of FIG. 1(b) as viewed from various directions;
FIG. 3 is an exploded view of each panel member forming the airbag cushion of FIG. 2(a);
FIG. 4 is a diagram depicting the process by which the airbag cushion in FIG. 1(b) restrains a rear seat occupant, as viewed from the side;
FIG. 5 is a diagram depicting the process by which the airbag cushion in FIG. 1(b) restrains the rear seat occupant, as viewed from above; and
FIG. 6 is a diagram depicting a Modified Example of the airbag cushion in FIG. 2.

### EMBODIMENTS OF THE INVENTION

Preferred embodiments according to the present invention will hereinafter be described in detail with reference to the attached drawings. Dimensions, materials, other specific numerical values, and the like indicated in the embodiments are merely examples for ease of understanding the invention and do not limit the present invention unless otherwise noted. Note that in the present specification and drawings, elements having essentially identical functions and configurations are labeled with identical symbols in order to omit redundant descriptions, and illustrations of elements not directly related to the present invention are omitted.

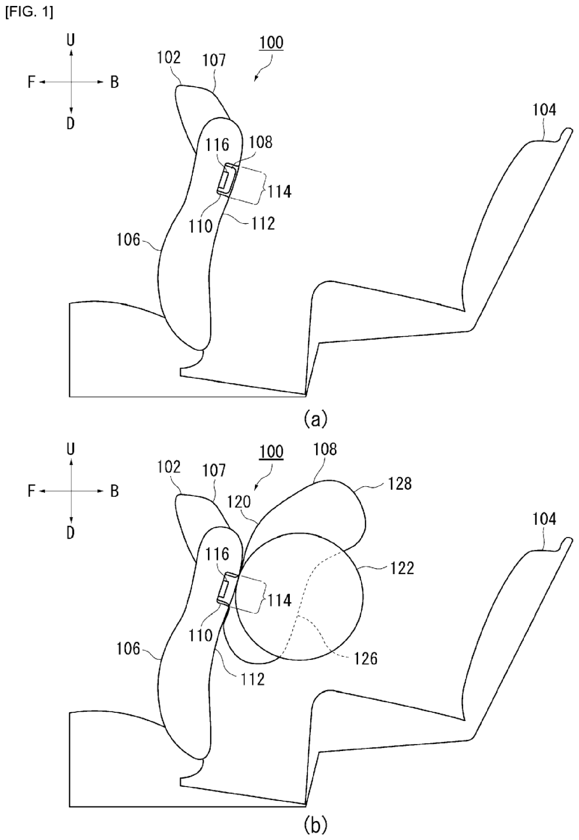

FIG. 1 is a diagram depicting an outline example of a vehicle rear seat occupant protection airbag device (hereinafter referred to as airbag device 100) according an embodiment of the present invention. FIG. 1(a) is a diagram depicting a state before activation of the airbag device 100. The airbag device 100 of the present embodiment is installed on a seat back 106 of a front seat 102, and is implemented as a restraint device for restraining a rear seat occupant seated in a rear seat 104 from the front.

Seats may be able to rotate forward and backward within the vehicle, and the front-back direction of the seat may not coincide with the front-back direction of the vehicle. Therefore, the directions used in the following description are primarily based on the seats, not the vehicle itself. For example, in each of the drawings from FIG. 1(a) onwards, the front-back direction of the front seat 102 in the standard position is indicated by arrows F (Forward) and B (Back), the left and right width directions of the front seat 102 are indicated by arrows L (Left) and R (Right), and the vertical direction of the vehicle is indicated by arrows U (Up) and D (Down). Of these, "upward" refers to the direction of the head part of an occupant properly seated in a seat, and "downward" refers to the direction of the lower legs of the occupant. In addition, with respect to the seat back 106 of the front seat 102, the side that comes into contact with a front seat occupant seated in the front seat 102 is referred to as the front side, and the side opposite the front seat occupant is referred to as the back side.

The seat back part 112 is the portion of the front seat 102 that forms the back of the seat back 106. Before activation, an airbag cushion 108 of the airbag device 100 is stored in a small, retractable form by being rolled up or folded, and is stowed in a stowing part 110 of the seat back part 112.

The stowing part 110 is installed with an opening part 114 facing the rear seat 104. An inflator 116, which is a gas generating device, is also installed inside the stowing part 110.

The inflator 116 is an apparatus that supplies gas to the airbag cushion 108, and in the present embodiment, a disk-shaped type is used. Examples of currently prevailing inflators include: types which are filled with a gas-generating agent and burn the agent to generate gas; types which are filled with compressed gas and supply gas without generating heat; and hybrid types which utilize both combustion gas and compressed gas. Any of these types can be used for the inflator 116.

Note that in the present embodiment, the inflator 116 and the airbag cushion 108 are directly connected, but other configurations are also possible, such as indirectly connecting the inflator 116 and the airbag cushion 108 by interposing a pipe-shaped gas guide or the like therebetween.

FIG. 1(b) is a diagram depicting a vehicle after activation of the driver seat airbag device 100. The airbag device 100 is activated when a frontal collision is predicted or detected by various sensors.

The inflator 116 is activated upon receiving a signal from a control unit (not depicted) and ejects gas. The airbag cushion 108 cleaves the cover of the stowing part 110 based on the pressure of gas supplied from the inflator 116, and expands and deploys toward the rear seat 104.

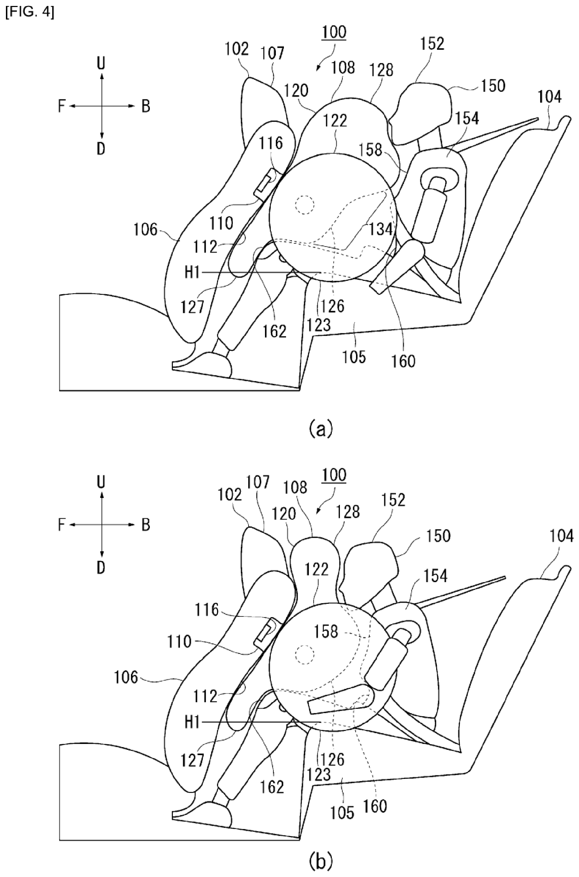

The airbag cushion 108 expands and deploys between the seat back part 112 of the seat back 106 of the front seat 102 and a rear seat occupant seated in the rear seat 104 behind the front seat 102 (see rear seat occupant 150 in FIG. 4(a)), restraining the rear seat occupant from the front and preventing the rear seat occupant from moving forward.

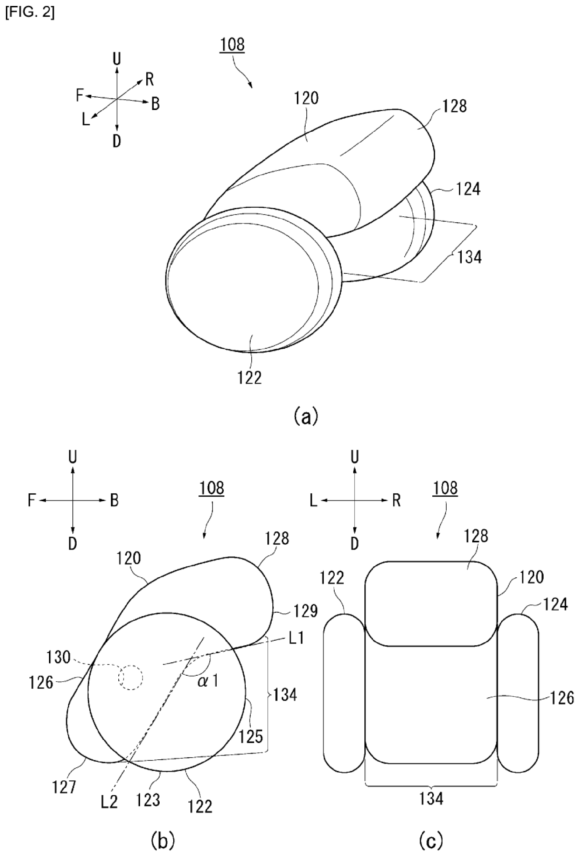

FIG. 2 is a perspective view depicting the airbag cushion 108 of FIG. 1(b) as viewed from various directions. FIG. 2(a) is a perspective view of the airbag cushion 108 of FIG. 1(b) as seen from the rear left side.

The airbag cushion 108 is configured to include a central main chamber 120 and a pair of left- and right-side chambers 122 and 124. The airbag cushion 108 primarily uses a cushion upper part 128 above the main chamber 120 and the left- and right-side chambers 122 and 124 to support the body of the rear seat occupant.

FIG. 2(b) is a diagram depicting the airbag cushion 108 depicted in FIG. 1(b) as viewed from the left side. The main chamber 120 has a curved shape when viewed from the width direction of the front seat 102 (see FIG. 1(b)).

A cushion base part 126 is the portion of the main chamber 120 that expands and deploys vertically along the seat back part 112 of the front seat 102 (see FIG. 1(b)). The cushion base part 126 expands and deploys along a portion of the seat back part 112, from near a headrest 107 to the front of the seat cushion of the rear seat 104. The cushion base part 126 contacts the seat back part 112 of the front seat 102 to support the orientation of the airbag cushion 108 when a rear seat occupant is restrained.

The cushion upper part 128 is the portion of the main chamber 120 that bends rearward from the upper end of the cushion base part 126 and expands and deploys. The cushion upper part 128 expands and deploys into a shape that protrudes from the cushion base part 126 toward the rear seat 104 (see FIG. 1(b)). For example, in the present embodiment, the cushion upper part 128 expands and deploys from an upper part of the cushion base part 126, the portion that is near the headrest 107, toward the head part of the rear seat occupant. The cushion base part 128 restrains the head part of the rear seat occupant when the occupant moves forward.

The side chambers 122 and 124 are provided in a pair on either side of the cushion base part 126 in the width direction of the front seat 102 (see FIG. 1(b)). The side chambers 122 and 124 expand and deploy, protruding from both sides of the cushion base part 126 toward the rear seat 104. In the present embodiment, the side chambers 122 and 124 expand and deploy toward each of the shoulders of the rear seat occupant, restraining the shoulders of the occupant when the shoulders move forward.

The side chambers 122 and 124 are configured to expand and deploy in a circular shape when viewed from the width direction of the front seat 102 (see FIG. 1(b)). With the circular shape side chambers 122 and 124, there is no bias in shape, enabling appropriate restraint of the shoulders of the rear seat occupant by any portion of the periphery.

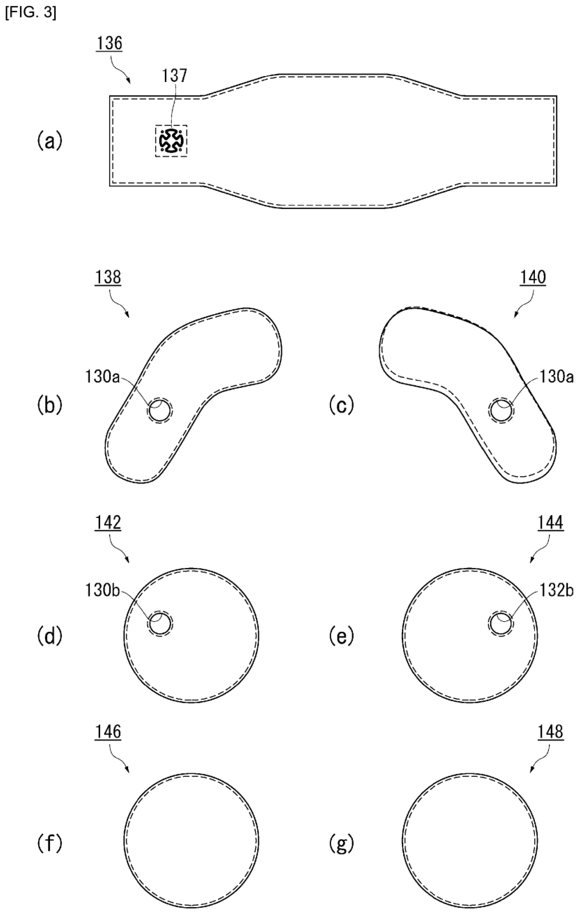

The airbag cushion 108 has an inflator connection part 137 (see FIG. 3(a)) which connects to the inflator 116 (see FIG. 1(b)), provided on the front side of the cushion base part 126. Therefore, the airbag cushion 108 first begins to expand and deploy from the cushion base part 126 of the main chamber 120.

The side chambers 122 and 124 (see FIG. 2(a)) are connected to the cushion base part 126 of the main chamber 120 by an inner vent 130. For example, in the left side chamber 122, a part of the inner panel overlaps with the side of the cushion base part 126, and the inner vent 130 is provided to pass through this area.

The inner vent 130 directs gas from the inflator 116 through the cushion base part 126 to the side chamber 122. With this configuration, by supplying gas to the side chamber 122 in succession after the cushion base part 126, the shoulders of the rear seat occupant can be effectively restrained by the side chamber 122.

FIG. 2(c) is a view depicting the airbag cushion 108 in FIG. 1(b), as viewed from the back. The airbag cushion 108 is provided with a cushion recess part 134 located below the cushion upper part 128 and between the pair of side chambers 122 and 124.

The cushion recess part 134 is a region of the airbag cushion 108 that is formed in a state indented toward the front seat 102. In the present embodiment, the cushion recess part 134 is formed in the area in front of a chest part 158 and abdomen part 160 of the rear seat occupant 150 (see FIG. 4(a)) when seated in a normal orientation. The cushion recess part 134 enables suppressing injury to the chest part 158 and abdomen part 160 of the rear seat occupant 150 when the rear seat occupant 150 is restrained by the airbag cushion 108.

FIG. 3 is an expanded view of each panel member that forms the airbag cushion 108 of FIG. 2(a). Each panel member depicted in FIG. 3 is a cloth-like member that constitutes the outer surface of the airbag cushion 108.

FIG. 3(a) is an example of a main panel 136. The main panel 136 is a panel member that forms the surfaces of the main chamber 120 (see FIG. 2(a)) other than the left and right sides.

The main panel 136 is a long, strip-like piece that connects the edges of a pair of side panels 138 and 140 (see FIG. 3(b) and FIG. 3(c)) to each other by sewing or other means. The end parts of both sides of the main panel 136 in the longitudinal direction are joined to each other by sewing or the like.

The main panel 136 is provided with an inflator connection part 137 that is connected to the inflator 116 (see FIG. 1(b)). The inflator connection part 137 includes a through hole into which a part of the inflator 116 is inserted, and a plurality of bolt holes provided around the periphery thereof for inserting stud bolts of the inflator 116. The inflator connection part 137 is secured to the bottom of the stowing part 110 together with the inflator 116 by using stud bolts or the like.

FIG. 3(b) is a diagram depicting an example of the left side panel 138. The side panel 138 is a panel member that forms the left side of the main chamber 120 (FIG. 2(a)). The side panel 138 has a curved shape, and the outer edge thereof is joined to the long side of the main chamber 120. The side panel 138 has an inner vent 130a formed therein that supplies gas to the side chamber 122.

FIG. 3(c) is a diagram depicting an example of the right side panel 140. The side panel 140 is a panel member that forms the right side of the main chamber 120 (FIG. 2(a)). The side panel 140 has a shape symmetrical to the side panel 138 in FIG. 3(b), and has an inner vent 132a that supplies gas to the side chamber 124.

FIG. 3(d) is a diagram depicting a sub-panel 142. The sub-panel 142 is a panel member that forms the inner surface of the left side chamber 122 (FIG. 2(a)). The sub-panel 142 is circular in shape and is provided with an inner vent 130b that is superimposed on and connected to the inner vent 130a of the side panel 138.

FIG. 3(e) is a diagram depicting a sub-panel 144. The sub-panel 144 is a panel member that forms the inner surface of the right-side chamber 124 (FIG. 2(a)), and has a shape symmetrical to the sub-panel 142 in FIG. 3(d). The sub-panel 144 is circular in shape and is provided with an inner vent 132b that is superimposed on and connected to the inner vent 132a of the side panel 140.

FIG. 3(f) is a diagram depicting a sub-panel 146. The sub-panel 146 is a panel member that forms the outer surface of the left side chamber 122 (FIG. 2(a)). The sub-panel 146 is circular in shape, and the outer edge thereof is joined to the sub-panel 142, thereby forming a circular side chamber 122 when viewed from the side.

FIG. 3(g) is a diagram depicting a sub-panel 148. The sub-panel 148 is a panel member that forms the outer surface of the right side chamber 124 (FIG. 2(a)). The sub-panel 148 is circular in shape, and the outer edge thereof is joined to the sub-panel 144, thereby forming a circular side chamber 124 when viewed from the side.

In this manner, the airbag cushion 108 of FIG. 2(a) can be achieved with a more concise panel configuration using a total of seven panel members: the main panel 136, the pair of side panels 138 and 140, and the sub-panels 142, 144, 146, and 148 depicted in FIG. 3.

FIG. 4 is a diagram depicting the process by which the airbag cushion 108 in FIG. 1(b) restrains a rear seat occupant 150, as viewed from the side. FIG. 4(a) is a diagram depicting the appearance of the airbag cushion 108 immediately after expansion and deployment.

The rear seat occupant 150 is an AF05 dummy, which is a Hybrid III dummy used in frontal collision tests for automobiles. AF05 is a human body dummy modeled after a woman of petite build, who is 145 cm tall, sits 79 cm high, and weighs approximately 45 kg. Each anthropomorphic dummy, including the AF05 dummy, is manufactured based on the standards of the National Highway Traffic Safety Association (NHTSA).

Note that as the rear seat occupant 150, in addition to the AF05 described above, any of the Hybrid III 's AM50 dummy, AM95 dummy, or Thor dummy can be used. The AM50 dummy is a human body dummy modeled after an adult U.S. male of average build, 175 cm tall, sitting 88 cm high, and weighing approximately 78 kg. The AM95 dummy is a human body dummy modeled after an adult U.S. male of large build, standing 183 cm tall, sitting 94 cm high, and weighing approximately 101 kg. The Thor dummy is a human body dummy developed as a successor to the Hybrid III dummy, and models only the average body mass male. By using dummies of the respective models, an airbag cushion capable of restraining occupants having different physiques can be implemented.

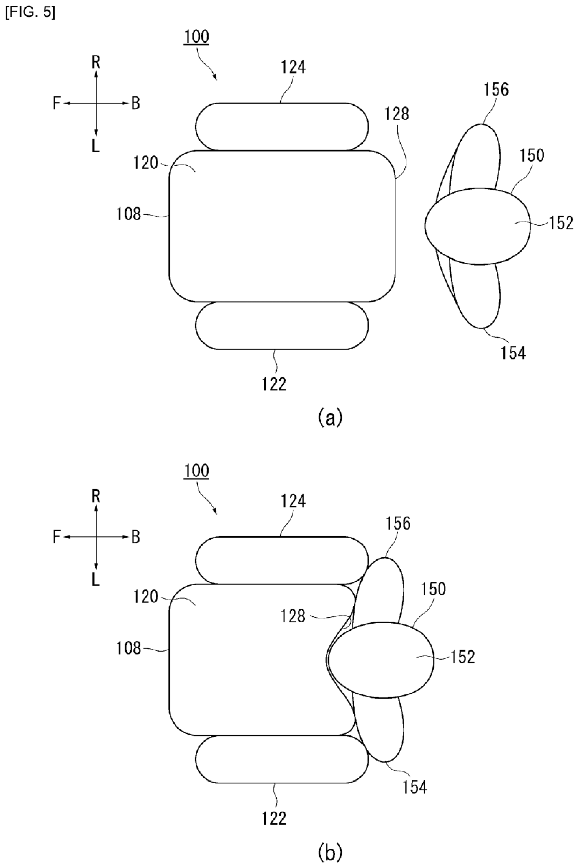

As depicted in FIG. 1(b), the cushion upper part 128 of the airbag cushion 108 expands and deploys, protruding toward a head part 152 of the rear seat occupant 150 (see FIG. 4(a)) who is seated in the rear seat 104 in a normal orientation. Furthermore, the side chamber 122 then expands and deploys, protruding toward each of the shoulders 154 and 156 (see FIG. 5(a)) of the rear seat occupant 150 who is seated in a normal orientation.

Here, the seat back 106 of the front seat 102 in FIG. 1(b) is depicted as an example of a standard angle state. However, the seat back 106 may be tilted backward based on the reclining function. In this case, with a simple airbag cushion 108, when the seat back 106 is tilted backward, the position thereof moves downward, and the rear seat occupant 150 (see FIG. 4(a)) may be more likely to come into contact with the area around the headrest 107 of the seat back 106. Therefore, with the airbag cushion 108 of the present embodiment, the cushion upper part 128 expands into a shape that protrudes to the rear.

The seat back 106 depicted in FIG. 4(a) is tilted at a more rearward angle than the seat back 106 depicted in FIG. 1(b). Even in this case, because the cushion upper part 128 of the airbag cushion 108 protrudes toward the rear seat 104 side, the rear seat occupant 150 is easily received by the cushion upper part 128.

FIG. 4(b) is a diagram depicting a state in which the rear seat occupant 150 of FIG. 4(a) has moved forward. When the head part 152 and upper body of the rear seat occupant 150 fall forward due to inertia such as a frontal collision, the cushion upper part 128 restrains and protects the rear seat occupant 150 from the front.

Since the cushion upper part 128 protrudes rearward, the airbag cushion 108 can secure a larger operation range, that is, a larger stroke, from contact by the rear seat occupant 150 until movement stops, according to the protrusion amount of the cushion upper part 128. A large stroke means that the amount of load that can be absorbed is also large. Therefore, the airbag cushion 108 can restrain the rear seat occupant 150 without allowing the rear seat occupant 150, particularly the head part 152, to contact the front seat 102. In particular, since the airbag cushion 108 secures a large stroke with respect to the head 152 of the rear seat occupant 150, reduction in thickness of the airbag cushion and bottoming out against the front seat 102 when the head part 152 enters the airbag cushion can be prevented.

The cushion base part 126 can also restrain the rear seat occupant 150. The lower end of the cushion base part 126 is positioned near the front of the seat cushion of the rear seat 104. Therefore, the cushion base part 126 can restrain the vicinity of the knees 162 of the rear seat occupant 150 from the front, and can protect the vicinity of the knees 162 of the rear seat occupant 150 from collision with the front seat 102.

As depicted in FIG. 2(b), with the airbag cushion 108 of the present embodiment, the cushion recess part 134 indented toward the front seat 102 side is formed below the cushion upper part 128.

The cushion recess part 134 is formed in a range in front of the chest part 158 and abdomen part 160, as viewed from the rear seat occupant 150 seated in the rear seat 104 in a normal orientation. Therefore, the cushion base part 126 does not contact the chest part 158 and abdomen part 160 of the rear seat occupant 150, or contacts the chest part 158 and abdomen part 160 later than the timing at which the cushion upper part 128 and the side chambers 122 contact the head part 152 and shoulders 154. With this configuration, the airbag cushion 108 can suppress injury values of the chest part 158 and abdomen part 160.

As depicted in FIG. 2(b), the airbag cushion 108 is configured such that, when viewed from the side, the internal angle α1 between the cushion upper part 128 and the cushion base part 126 becomes an obtuse angle (90° < α1 < 180°). More specifically, a tangent line L1 on the lower side of the cushion upper part 128 forms an obtuse angle with respect to a tangent line L2 on the rear side of the cushion base part 126.

In this manner, since the internal angle α1 between the cushion upper part 128 and the cushion base part 126 is an obtuse angle, when the head part 152 of the rear seat occupant 150 (see FIG. 4(b)) enters the cushion upper part 128, the cushion upper part 128 is less likely to bend relative to the cushion base part 126. The head part 152 of the rear seat occupant 150 can thereby be suitably restrained.

After expansion and deployment, a tip end part 129 on the rear seat side of the cushion upper part 128 is set so as to be in a state of protruding farther toward the rear seat occupant 150 side (see FIG. 4(a)) than the end parts 125 on the rear seat side of the side chambers 122 and 124 (see FIG. 2(a)). As a result, after the head part 152 contacts the cushion upper part 128 or at the same time thereof, the shoulders 154 contact the side chambers 122 and 124, and the rear seat occupant 150 can be efficiently restrained.

As depicted in FIG. 4(a), after expansion and deployment, lower parts 123 of the side chambers 122 and 124 are set so as to be in a state of contact with a seat cushion 105 of the rear seat 104. With this configuration, the side chambers 122 and 124 can stabilize the orientation and improve the restraining force. For example, since the lower parts 123 of the side chambers 122 and 124 are in contact with the seat cushion 105, the side chambers are in a state of being supported by the seat cushion 105. Accordingly, when the side chambers 122 and 124 restrain the shoulders 154 of the rear seat occupant 150 from the front or restrain the knees 162 from the left and right, the side chambers can perform restraint in a stable orientation.

After expansion and deployment, a lower-end part 127 of the cushion base part 126 is set so as to be in a state of being positioned near a horizontal line H1 extended from a front-end part of the upper surface of the seat cushion 105 of the rear seat 104. With this configuration, the cushion base part 126 is arranged in front of the knees 162 of the rear seat occupant 150, and the knees 162 of the rear seat occupant 150 can be suitably restrained.

FIG. 5 is a diagram depicting the process by which the airbag cushion 108 of FIG. 1(b) restrains the rear seat occupant 150, as viewed from above.

FIG. 5(a) is a diagram depicting the appearance of the airbag cushion 108 immediately after expansion and deployment. As described above, the cushion upper part 128 expands and deploys so as to protrude toward the head part 152 of the rear seat occupant 150.

The side chambers 122 and 124 expand and deploy, protruding respectively from both sides of the main chamber 120 toward both shoulders 154 and 156 of the rear seat occupant 150 seated in the rear seat 104 (see FIG. 4(a)) in a normal orientation.

FIG. 5(b) is a diagram depicting a state in which the rear seat occupant 150 of FIG. 5(a) has moved forward. When the head part 152 and upper body of the rear seat occupant 150 fall forward due to inertia such as a frontal collision, the cushion upper part 128 restrains the head part 152 from the front, and the side chambers 122 and 124 respectively restrain the shoulder 154 and shoulder 156 of the rear seat occupant 150 from the front.

As described above, the airbag cushion 108 of the present embodiment can reduce the load on the chest part 158 and abdomen part 160 by means of the cushion recess part 134 while restraining the head part 152, shoulders 154 and 156, and the vicinity of the knees 162 of the rear seat occupant 150 (see FIG. 4(b)) using the cushion upper part 128 and the side chambers 122 and 124. According to this configuration, the rear seat occupant 150 can be sufficiently restrained via strong locations of the body such as the head part 152, shoulders 154 and 156, and the vicinity of the knees 162, while impact and deflection of the chest part 158 and abdomen part 160 are reduced and injury values are suppressed. Therefore, according to the vehicle rear seat occupant protection airbag device 100, occupant restraint performance can be improved while suppressing the injury values of the rear seat occupant 150.

### Modified Example

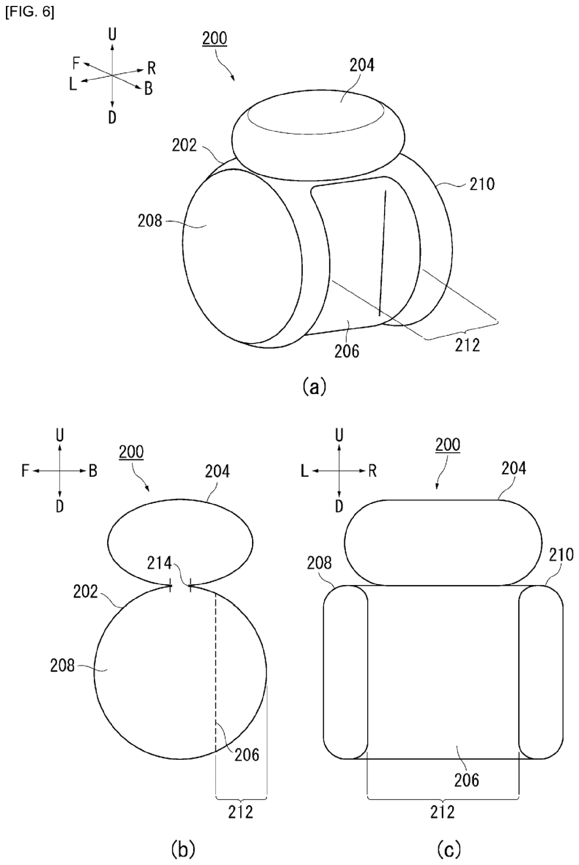

FIG. 6 is a diagram depicting a modified example of the airbag cushion 108 in FIG. 2 (airbag cushion 200). In FIG. 6, the same signs are attached to the same structural elements as those described above, and a description of the aforementioned structural elements is omitted. In the following description, components having the same name as a component already described are assumed to have the same function unless otherwise specified, even if marked with a different sign.

An airbag cushion 200 is configured by a main chamber 202 and a cushion upper part 204 provided as a separate chamber.

The main chamber 202 is a chamber in which the cushion base part 126 and the side chambers 122 and 124 of the airbag cushion 200 of FIG. 2(a) are integrated. The main chamber 202 forms a cushion base part 206, a pair of left- and right-side chamber portions 208 and 210, and a cushion recess part 212 indented toward the front seat 102 side (see FIG. 1(b)).

The cushion upper part 204 is a chamber additionally provided at an upper part of the cushion base part 206 of the main chamber 202, and can exhibit the same function as the cushion upper part 128 of FIG. 2(a).

FIG. 6(b) is a diagram depicting the airbag cushion 200 of FIG. 6(a), as viewed from the left side. In FIG. 6(b), an internal inner vent 214 and the like are also partially depicted in a transparent state.

The side chamber portion 208 in the main chamber 202 has a circular shape when viewed from the side, and expands and deploys, protruding farther rearward than the cushion base part 206.

The cushion upper part 204 also expands and deploys, protruding farther rearward than the cushion base part 206. The cushion upper part 204 is connected internally to the cushion base part 206 of the main chamber 202 by the inner vent 214, and receives gas from the main chamber 202 and expands and deploys.

FIG. 6(c) is a diagram depicting the airbag cushion 200 of FIG. 6(a), as viewed from the rear. With the airbag cushion 200 as well, the cushion recess part 212 is formed below the cushion upper part 204 and between the left- and right-side chamber portions 208 and 210 of the main chamber 202.

The airbag cushion 200 is configured such that expansion and deployment first begin from the cushion base part 206 and the side chamber portions 208 and 210, and subsequently the cushion upper part 204 expands and deploys. Therefore, the airbag cushion 200 can first restrain the knees 162 and shoulders 154 and 156 of the rear seat occupant 150 by the cushion base part 206 and the side chamber portions 208 and 210, and subsequently restrain the head part 152 by the cushion upper part 204.

By providing the cushion recess part 212, the airbag cushion 200 can also avoid contact with the chest part 158 and abdomen part 160 of the rear seat occupant 150, or can contact the chest part 158 and abdomen part 160 later than the head part 152 and shoulders 154 and 156.

The airbag cushion 200 of the present modified example can also suppress injury values by reducing impact and deflection of the chest part 158 and abdomen part 160 while restraining strong locations of the body of the rear seat occupant 150 such as the head part 152, shoulders 154 and 156, and the vicinity of the knees 162 (see FIG. 4(b)). Therefore, by using the airbag cushion 200, occupant restraint performance can be improved while suppressing the injury values of the rear seat occupant 150.

Preferred examples of the present invention were described above while referring to the attached drawings. However, the embodiments described above are preferred examples of the present invention, and other embodiments can be implemented or performed by various methods. In particular, unless described otherwise in the specification of the present application, the invention is not limited to the shape, size, configurational disposition, and the like of parts depicted in detail in the attached drawings. In addition, expressions and terms used in the specification of the present application are used for providing a description, and the invention is not limited thereto, unless specifically described otherwise.

Therefore, a person of ordinary skill in the art could obviously conceive of various changed examples or modified examples within the scope described in the scope of the claims, which is understood to naturally belong to the technical scope of the present invention.

### INDUSTRIAL APPLICABILITY

The present invention can be used in a vehicle rear seat occupant protection airbag device that restrains a rear seat occupant.

### DESCRIPTION OF CODES

100. Airbag device, 102. Front seat, 104. Rear seat, 105. Horizontal line, 106. Seat back, 107. Headrest, 108. Airbag cushion, 110. Stowing part, 112. Seat back part, 114. Opening part, 116. Inflator, 120. Main chamber, 122, 124. Side chamber, 125. End part, 126. Cushion base part, 127. Lower-end part, 128. Cushion upper part, 129. Tip end part, 130, 130a, 130b. Inner vent, 132, 132a, 132b. Inner vent, 134. Cushion recess part, 136. Main panel, 137. Inflator connection part, 138. Side panel, 140. Side panel, 142. Sub-panel, 144. Sub-panel, 146. Sub-panel, 148. Sub-panel, 150. Rear seat occupant, 152. Head part, 154, 156. Shoulder, 158. Chest part, 160. Abdomen part, 162. Knee, H1. Horizontal line, L1. Tangent line, L2. Tangent line, 200. Airbag cushion, 202. Main chamber, 204. Cushion upper part, 206. Cushion base part, 208, 210. Side chamber portion, 212. Cushion recess part, 214. Inner vent.

## Claims

1. A vehicle rear seat occupant protection airbag device comprising:
a seat back part that forms a back surface of a seat back of a front seat of a vehicle;
an airbag cushion that is stowed in a prescribed stowed form in the seat back part and expands and deploys between the seat back part and a rear seat occupant seated in a rear seat behind the front seat; and
an inflator that is installed inside the seat back part and supplies gas to the airbag cushion, wherein
the airbag cushion includes:
a cushion base part that expands and deploys along the seat back part;
a cushion upper part that expands and deploys, protruding from an upper part of the cushion base part toward the rear seat;
a pair of side chambers that respectively expand and deploy, protruding from both sides of the cushion base part in a width direction of the front seat toward the rear seat; and
a cushion recess part that is formed in a range below the cushion upper part and between the pair of side chambers and is indented toward the front seat.

2. The vehicle rear seat occupant protection airbag device according to claim 1, wherein the side chambers expand and deploy in a circular shape when viewed from the width direction of the front seat.

3. The vehicle rear seat occupant protection airbag device according to claim 1 or 2, wherein after expansion and deployment, lower parts of the side chambers are in a state of contact with a seat cushion of the rear seat.

4. The vehicle rear seat occupant protection airbag device according to claim 1, wherein the airbag cushion further comprises:
an inflator connection part provided in the cushion base part and into which a part of the inflator is inserted; and
an inner vent that connects the cushion base part and the side chamber and sends gas from the inflator from the cushion base part to the side chamber.

5. The vehicle rear seat occupant protection airbag device according to claim 1, wherein the cushion upper part expands and deploys such that an internal angle between the cushion upper part and the cushion base part is an obtuse angle.

6. The vehicle rear seat occupant protection airbag device according to claim 1, wherein after expansion and deployment, a tip end part on the rear seat side of the cushion upper part is in a state of protruding farther in a direction of the rear seat occupant than end parts on the rear seat side of the pair of side chambers.

7. The vehicle rear seat occupant protection airbag device according to claim 1, wherein after expansion and deployment, a lower-end part of the cushion base part is in a state of being positioned near a horizontal line extended from a front-end part of an upper surface of a seat cushion of the rear seat.
